# EUROPÄISCHE PATENTSCHRIFT

(11) **EP 0 580 988 B1**
(45) Veröffentlichungstag und Bekanntmachung des Hinweises auf die Patenterteilung: **06.12.1995**
(21) Anmeldenummer: 93108768.8
(22) Anmeldetag: 01.06.1993
(51) Int. Cl.: F16D 41/08

(54) **Klemmrollenkupplung für beide Drehrichtungen mit fliehkraftgesteuerter Freilaufwirkung**
Bi-directional roller clutch with centrifugally controlled free-wheel action
Embroyage bidirectionnel à rouleaux avec fonction roue-libre à commande centrifuge

(30) Priorität: 30.07.1992 DE 4225202
(43) Veröffentlichungstag der Anmeldung: 02.02.1994
(73) Patentinhaber: STEYR-DAIMLER-PUCH AKTIENGESELLSCHAFT, 1010 Wien (AT)
(72) Erfinder: Gratzer, Franz, Dipl.-Ing., A-8565 St. Johann (AT)

(56) Entgegenhaltungen:
- DE-B- 1 110 532
- FR-A- 2 521 921

## Beschreibung

Bei allradangetriebenen Kraftfahrzeugen mit einer über eine schlupfgesteuerte Kupplung angetriebenen zweiten Treibachse (meist die Hinterachse) besteht das Problem, daß die Hinterräder durch die Verbindung mit den Vorderrädern zum Überbremsen neigen und so die Bodenhaftung verlieren, was zum Ausbrechen des Fahrzeuges führt. Besonders kritisch sind die Verhältnisse bei Blockierbremsungen bzw. bei Verwendung eines ABS.

Um dem unter Vermeidung einer gesteuerten Trennkupplung entgegenzuwirken, ist die zusätzliche Verwendung eines Freilaufes üblich. Dieser hat aber den Nachteil, daß er für allradgetriebene Rückwärtsfahrt überbrückt werden muß. Alternativ dazu verwendet man einen Doppelfreilauf, der die Übertragung von Antriebskräften vorwärts und rückwärts ermöglicht.

Dieser hat jedoch den Nachteil, sowohl bei Vorwärtsfahrt als auch bei Rückwärtsfahrt im Schubbetrieb (Motorbremsung) zu entkuppeln, was im Gelände und auf vereisten Bergstraßen zu gefährlichen Situationen führen kann.

Aus der DE-A-27 40 638 ist ein in beiden Drehrichtungen wirksamer Klemmrollenfreilauf bekannt, der die Übertragung von Antriebskräften auf die zweite Triebachse eines Fahrzeuges durch das Zusammenwirken einer Reibverbindung zwischen dem der zweiten Triebachse zugehörigen Ring und einem Klemmrollenkäfig bewirkt. Beim Überholen dieses Gliedes verhindert ein über eine weitere Reibverbindung zum feststehenden Gehäuse gesteuerter Klinkenmechanismus, daß sich der Klemmrollenkäfig in die Position bewegt, in der Schubmomente bzw. Bremsmomente von der zweiten Triebachse zum Triebwerk des Fahrzeuges übertragen werden. Die zweite Triebachse läuft also im Schubbetrieb immer frei, was die Fahrsicherheit in der oben erwähnten Weise beeinträchtigt.

Der Erfindung liegt somit die Aufgabe zugrunde, eine in beiden Richtungen wirkende Klemmrollenkupplung zu schaffen, die ohne Einwirkung von außen, (z.B. Betätigung von außen oder Reibschluß mit einem Gehäuse) nur bei Vorwärtsfahrt mit höherer Geschwindigkeit als Freilauf wirkt. Diese Kupplung soll das eingangs aufgezeigte durch die Verwendung schlupfgesteuerter Kupplungen in Kraftfahrzeugantrieben gestellte Problem lösen.

Erfindungsgemäß wird das dadurch erreicht, daß bei einer aus einem Satz Klemmrollen, einem ersten Ring mit in beiden Drehrichtungen wirkenden Anlauframpen als Kuppelfläche, einem zweiten Ring mit kreiszylindrischer Kuppelfläche und einem reibschlüssig mit einem der Ringe zusammenwirkendem Käfig bestehenden Klemmrollenkupplung der zweite Ring mit dem Käfig reibschlüssig zusammenwirkt, am ersten Ring oder am Käfig eine fliehkraftgesteuerte Klinke angebracht ist, und am Käfig oder am ersten Ring eine Anschlagfläche ausgebildet sind, an der die Klinke angreift, wenn sich der zweite Ring mit mindestens einer bestimmten Drehzahl in Vorwärtsrichtung dreht.

Durch die reibschlüssige Verbindung zwischen dem zweiten Ring mit der zylindrischen Kuppelfläche und dem Käfig ist rasches Einkuppeln nach Umkehr von Drehsinn oder Momentenflußrichtung bei niederer Drehzahl dann gewährleistet, wenn die fliehkraftgesteuerte Klinke unwirksam ist. Bei höherer Drehzahl schwenkt die Klinke in Wirkstellung, wirkt aber nur, wenn sich der erste Ring schneller als der zweite Ring dreht. Das ist bei der angegebenen Wirkungsrichtung der Nase nur im Schubbetrieb der Fall.

Da der Käfig von beiden Ringen gesteuert wird, ist es wesentlich, daß er mit einem Ring reibschlüssig und mit dem anderen Ring über die Klinke fallweise formschlüssig zusammenwirkt. Die beiden Ringe sind dann Kontrahenten und der die Klinke tragende Ring bzw der von der Klinke angegriffene Ring überwindet den Reibschluß zwischen dem anderen Ring und dem Käfig. Deshalb auch braucht die Reibung zwischen dem Käfig und dem zweiten Ring nur sehr gering sein, dadurch sehr geringer Verschleiß. Es ist zu beachten, daß die Klinke kein Drehmoment übertragt, sie steuert nur den Käfig.

Ob die Klinke am ersten Ring oder am Käfig angebracht ist und auf den Käfig oder den ersten Ring wirkt, macht nur insoferne einen Unterschied, als die Klinke als ein- oder zweiarmiger Hebel auszubilden ist. Als einarmiger, wenn die Klinke am Käfig gelagert und der erste Ring Außenring ist und wenn die Klinke am ersten Ring gelagert und dieser Innenring ist; sonst als zweiarmiger.

Im Rahmen der Erfindung können die Ringe prinzipiell Innen- oder Außenringe und treibend oder getrieben sein. In einer bevorzugten Ausführungsform jedoch ist der erste Ring der Innenring und der zweite Ring der Außenring (Anspruch 2). Das ergibt eine platzsparende Bauweise, weil die Klinke als einarmiger Hebel ausgebildet werden kann und eine billigere Fertigung, weil die Anlauframpen als Außenfläche leichter zu bearbeiten sind.

Dabei ist es bei Fahrzeugen mit zuschaltbarem Hinterradantrieb aus Sicherheitsgründen besonders vorteilhaft, wenn der erste Ring - der die Klinke trägt - der getriebene und der zweite Ring der treibende ist. Dann wirkt die Klinke nämlich ab einer bestimmten Drehzahl der Hinterräder. Dadurch wird eine Verfälschung dieser sicherheitswesentlichen Größe durch durchdrehende Hinterräder verhindert.

Im folgenden wird die Erfindung anhand von Abbildungen beschrieben und erläutert.
- Fig.1:: Schematische Darstellung eines Kraftfahrzeuges mit Allradantrieb, bei dem die erfindungsgemäße Kupplung verwendet wird.
- Fig.2:: Stirnansicht einer bevorzugten Ausführungsform der erfindungsgemäßen Kupplung.
- Fig.3:: Schnitt III-III zu Figur 2.
- Fig.4 bis 9:: Schematische Darstellung der Kupplung nach Figur 2 in verschiedenen Arbeitsstellungen.
- Fig.10:: Stirnansicht einer weiteren Ausführungsform der erfindungsgemäßen Kupplung.
- Fig.11:: Schnitt V-V zu Figur 4.

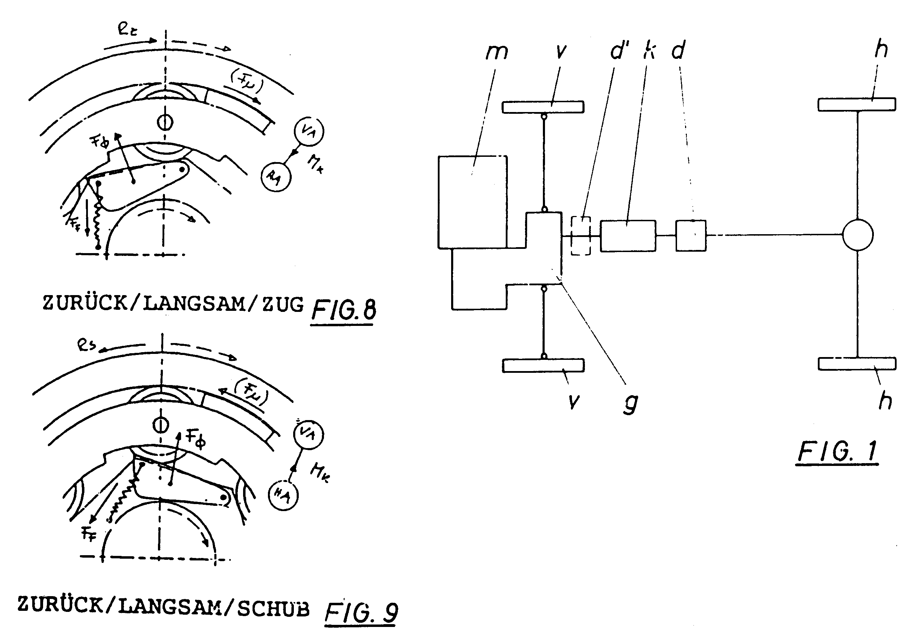

Das in Figur 1 schematisch dargestellte allradangetriebene Kraftfahrzeug weist einen Motorgetriebeblock m auf, von dem über ein Verzweigungsgetriebe g einerseits die Vorderräder v und andererseits über eine schlupfgeregelte Kupplung k und eine erfindungsgemäße Doppelkupplung d die Hinterräder h angetrieben werden. Die schlupfgeregelte Kupplung k könnte eine Lamellenkupplung, eine hydrostatische Kupplung, eine hydrodynamische Kupplung, eine gesteuerte oder ungesteuerte Flüssigkeitsreibungskupplung oder eine elektromagnetische oder elektroviskose Kupplung sein. Die erfindungsgemäße Doppelkupplung d könnte auch zwischen dem Verzweigungsgetriebe v und der schlupfgeregelten Kupplung k angeordnet sein, was strichliert mit d' angedeutet ist.

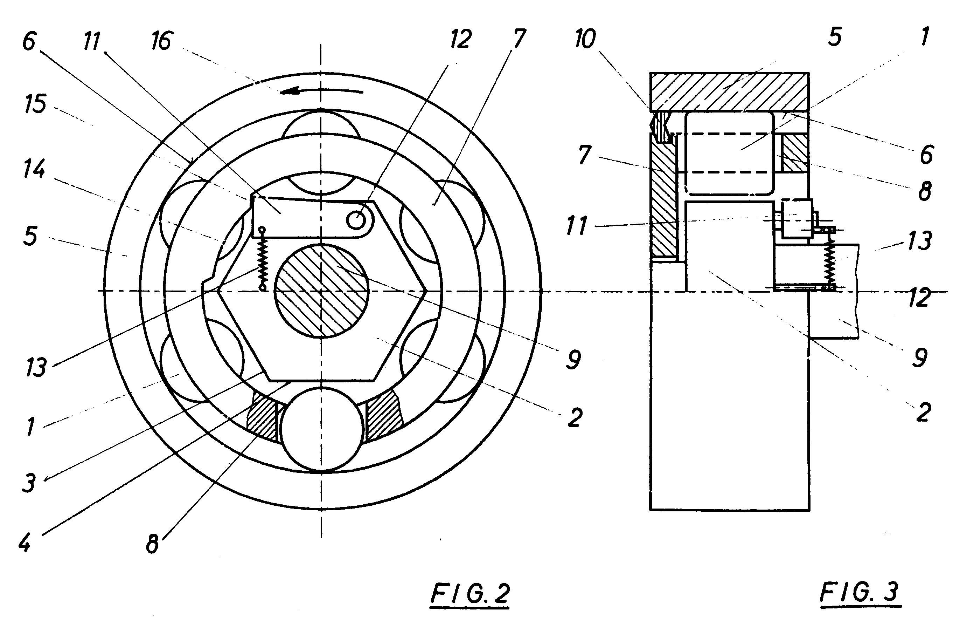

Die in Figur 2 und 3 dargestellte Kupplung besteht aus einer beliebigen Anzahl Klemmrollen 1, einem ersten Ring 2 mit in beiden Richtungen wirkenden Anlauframpen 3,4, einem zweiten Ring 5 mit zylindrischer Kuppelfläche 6 und einem Käfig 7, in dessen Ausnehmungen 8 die Klemmrollen 1 geführt sind. In dem dargestellten Ausführungsbeispiel ist der erste Ring 2 der Innenring, der über eine Ausgangswelle 9 mit den Hinterrädern h (Fig.1) in Verbindung steht und ist der zweite Ring 5 der Außenring, der von der Kupplung k oder dem Motor-Getriebeblock m aus angetrieben ist.

Zwischen dem Käfig 7 und dem zweiten Ring 5 ist ein Reibelement 10 angeordnet, das ein Reibring oder eine Mehrzahl von Reibschuhen sein kann. Auf dem ersten Ring 2 ist mindestens eine Klinke 11 um eine Achse 12 schwenkbar gelagert. Um Unwucht zu vermeiden, werden in der Praxis zumindest zwei Klinken 11 vorgesehen sein. Die Klinke 11 ist bei 12 exzentrisch gelagert, sodaß sie bei ausreichender Umfangsgeschwindigkeit gegen die Kraft einer Feder 13 nach außen schwenkt.

Der Käfig 7 weist eine Nase 14 (bei mehreren Klinken ebensoviele Nasen) auf, die eine in einer Richtung wirkende Anschlagfläche 15 bildet. An diese legt sich die Klinke 11 an, wenn bei dem mit 16 bezeichneten Drehsinn von Zug- auf Schubbetrieb übergegangen wird. Die Wirkungsweise dieser Kupplung ist die folgende:

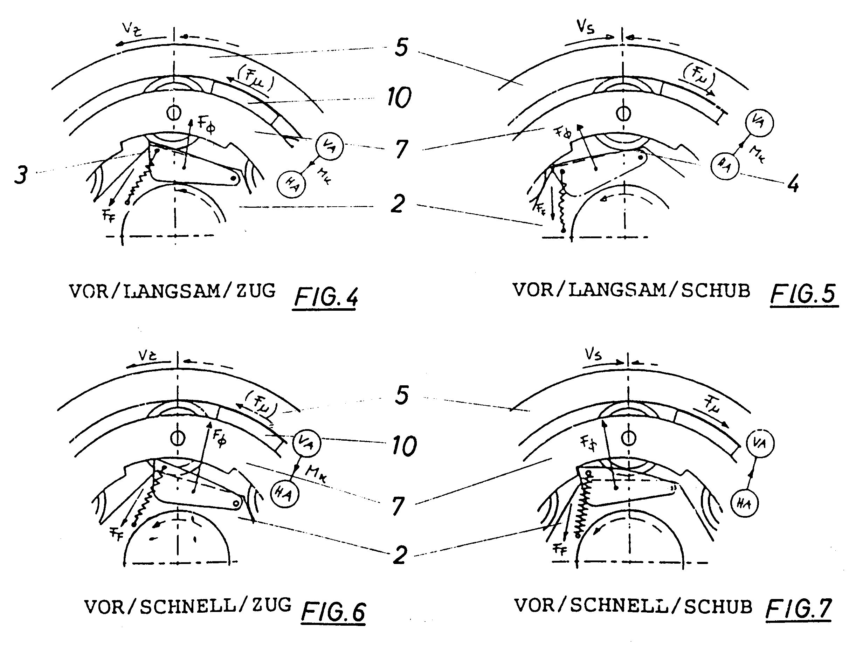

Fig.4: Bei langsamer Vorwärtsfahrt im Zugbetrieb wird der Außenring 5 vom Motor aus in Richtung des Pfeiles Vz angetrieben. Durch das Reibelement 10 wird der Käfig 7 mitgenommen und die Klemmrollen 1 an die Anlauframpen 3 des Innenringes 2 gepreßt. Die Kupplung ist geschlossen und das Antriebsmoment wird übertragen.

Fig.5: Wird nun auf Schubbetrieb übergegangen, so überholt bei gleichem Drehsinn der Innenring 2 den Außenring 5, bis sich die Klemmrollen 1 an die entgegengesetzten Anlaufflächen 4 des Innenringes 2 anlegen. Das wird durch den Reibschluß zwischen Käfig 7 und Außenring 5 gefördert. Eine Behinderung durch die Klinken 11 erfolgt bei Langsamfahrt nicht.

Fig.6: Bei schneller Vorwärtsfahrt sind die Verhältnisse wie in Fig.4. Die Klinken 11 sind dank der Zentrifugalkraft zwar in Wirkstellung, aber die Anschlagflächen 15 bewegen sich - nach Umkehr der Momentenflußrichtung kurzzeitig- von den Klinken 11 weg. Das Antriebsmoment wird übertragen.

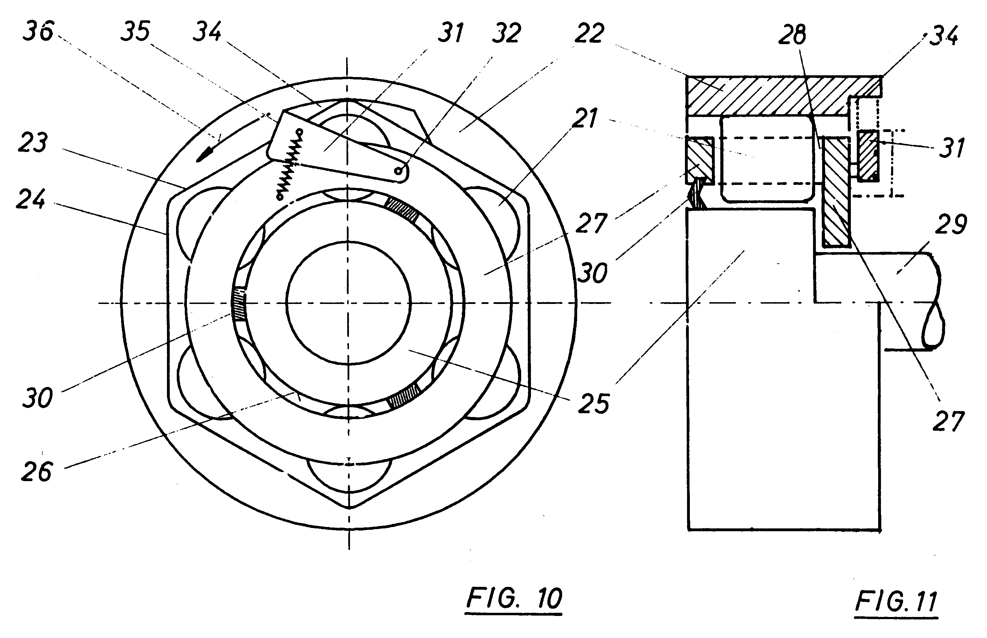

Fig.7: Wird nun - das ist der wesentliche Effekt der Erfindung - bei höherer Geschwindigkeit bis zum Blockieren der Vorderräder gebremst, wird über die Antriebsverbindung auch der Außenring 5 verzögert. Bei geschlossener Kupplung würde das zum Blockieren der Hinterräder führen. So aber überholt der Innenring 2 den Außenring 5. Dadurch werden die Klemmrollen in bekannter Weise außer Eingriff gebracht. Sobald das geschehen ist, legen sich die dank der Fliehkraft ausgeschwenkten Klinken 11 an die Anschlagflächen 15 und nehmen so den Käfig 7 mit. Dadurch können sich die Klemmrollen nicht an die Anlauframpen 4 legen, die Kupplung ist in Freilaufstellung.

Figur 8,9: Bei langsamer Rückwärtsfahrt sind die Verhältnisse im Zug- wie im Schubbetrieb wie bei langsamer Vorwärtsfahrt, nur mit umgekehrtem Drehsinn, da die Klinke sich in Ruhestellung befindet. Es steht also bei Rückwärtsfahrt das volle Antriebsmoment zur Verfügung.

Die in Figur 10 und 11 dargestellte Ausführungsform der erfindungsgemäßen Kupplung besteht aus einer beliebigen Anzahl Klemmrollen 21, einem ersten Ring 22 - hier dem Außenring - mit in beiden Richtungen wirkenden Anlauframpen 23,24, einem zweiten Ring 5 - hier dem Innenring - mit zylindrischer Kuppelfläche 26 und einem Käfig 27, in dessen Ausnehmungen 28 die Klemmrollen 21 geführt sind.

Zwischen dem Käfig 27 und dem zweiten Ring 25 ist ein Reibelement 30 angeordnet. Auf dem ersten Ring 22 ist mindestens eine Klinke 31 um eine Achse 32 schwenkbar gelagert. Die Klinke 31 ist bei 32 exzentrisch gelagert, sodaß sie bei ausreichender Umfangsgeschwindigkeit gegen die Kraft einer Feder 33 nach außen schwenkt. Der Ring 22 weist eine Ausnehmung 34 auf, die eine in einer Richtung wirkende Anschlagfläche 35 bildet. An diese legt sich die Klinke 31 an, wenn bei dem mit 36 bezeichneten Drehsinn von Zug- auf Schubbetrieb übergegangen wird. In Fig.11 ist mangels Sichtbarkeit der wirksame Teil der Klinke 31 punktiert angedeutet. Die Wirkungsweise dieser Kupplung ist analog der oben beschriebenen.

## Patentansprüche

1. Klemmrollenkupplung für beide Drehrichtungen, bestehend aus einem Satz Klemmrollen (1), einem ersten Ring (2) mit in beiden Richtungen wirkenden Anlauframpen (3, 4) als Kuppelfläche, einem zweiten Ring (5) mit kreiszylindrischer Kuppelfläche (6) und einem reibschlüssig mit einem der Ringe zusammenwirkendem Käfig (7), **dadurch gekennzeichnet,** daß der zweite Ring (5) mit dem Käfig (7) reibschlüssig zusammenwirkt, daß am ersten Ring (2) oder am Käfig (7) eine fliehkraftgesteuerte Klinke (11) angebracht ist und daß am Käfig (7) oder am ersten Ring (2) eine Anschlagfläche (15) ausgebildet ist, an der die Klinke (11) angreift, wenn sich der zweite Ring (5) mit einer bestimmten Mindest-Drehzahl in Vorwärtsrichtung dreht.

2. Klemmrollenkupplung nach Anspruch 1, **dadurch gekennzeichnet,** daß der erste Ring (2) der Innenring und der zweite Ring (5) der Außenring ist.

3. Klemmrollenkupplung nach Anspruch 1, **dadurch gekennzeichnet,** daß der erste Ring (2) der getriebene und der zweite Ring (5) der treibende ist.

## Claims

1. A bi-directional roller clutch comprising a set of grip rollers (1), a first ring (2) with inclined ramps (3, 4) acting in both directions as a coupling surface, a second ring (5) with a circular cylindrical coupling surface (6) and a cage (7) co-operating with one of the rings in a frictionally connected manner, **characterised in that** the second ring (5) co-operates with the cage (7) in a frictionally connected manner, and a detent (11) controlled by centrifugal force is positioned on the first ring (2) or on the cage (7), and a stop surface (15) is formed on the cage (7) or on the first ring (2) and the detent (11) engages with the said stop surface when the second ring (5) is rotating at a given minimum rotational speed in the forwards direction.

2. A roller clutch according to claim 1, **characterised in that** the first ring (2) is the inner ring and the second ring (5) is the outer ring.

3. A roller clutch according to claim 1, **characterised in that** the first ring (2) is the driven ring and the second ring (5) is the driving ring.

## Revendications

1. Accouplement à rouleaux de coincement opérant dans les deux sens de rotation, constitué d'un jeu de rouleaux de coincement (1), d'un premier anneau (2) avec des rampes de franchissement (3, 4) agissant dans les deux sens et faisant office de surfaces de couplage, d'un deuxième anneau (5) portant une surface de couplage (6) cylindrique circulaire et d'une cage (7) coopérant par friction avec l'un des anneaux, caractérisé en ce que le deuxième anneau (5) coopère par une liaison par friction avec la cage (7) , en ce que, sur le premier anneau (2) ou sur la cage (7), est monté un cliquet (11) commandé par la force centrifuge et en ce que, sur la cage (7), ou sur le premier anneau (2), est réalisée une face de butée (15), sur laquelle agit le cliquet (11) lorsque le deuxième anneau (5) tourne dans le sens avant, avec une vitesse de rotation minimale déterminée.

2. Accouplement à rouleaux de coincement selon la revendication 1, caractérisé en ce que le premier anneau (2) est l'anneau intérieur et le deuxième anneau (5) est l'anneau extérieur.

3. Accouplement à rouleaux de coincement selon la revendication 1, caractérisé en ce que le premier anneau (2) est l'anneau mené et le deuxième anneau (5) est l'anneau menant.
